# EUROPÄISCHE PATENTANMELDUNG

(11) **EP 3 786 790 A1**
(43) Veröffentlichungstag der Anmeldung: **03.03.2021**
(21) Anmeldenummer: 19194113.7
(22) Anmeldetag: 28.08.2019
(51) Int. Cl.: G06F 9/445

(54) **AUSFÜHRUNGSUMGEBUNG UND VERFAHREN FÜR EINEN PROZESS**

(71) Anmelder: Siemens Aktiengesellschaft, 80333 München (DE)
(72) Erfinder: Falk, Rainer, 85586 Poing (DE); Feist, Christian Peter, 80689 München (DE)

(57) **Zusammenfassung**

Die Erfindung betrifft ein Verfahren und eine Ausführungsumgebung, damit z. B. ein Prozess (z. B. eine Applikation oder eine nachladbare App) Informationen erhalten kann, um die Eigenschaften (z. B. Ausführungsumgebungseigenschaften) seiner Ausführungsumgebung besser beurteilen zu können.

## Beschreibung

Die Erfindung bezieht sich auf eine Ausführungsumgebung und ein Verfahren, um z. B. die Ausführung eines Prozesses zu steuern.

Nachfolgend werden Aspekte der Erfindung erläutert.

Gemäß einem ersten Aspekt betrifft die Erfindung eine Ausführungsumgebung für einen Prozess aufweisend:
- eine Kommunikationsschnittstelle zum Laden des Prozesses;
- ein Konfigurationsmodul, wobei
   ∘ das Konfigurationsmodul dazu eingerichtet ist, Ausführungsanforderungen für eine Ausführung des Prozesses zu konfigurieren und/oder zu speichern;
- ein Ausführungssteuerungsmodul, wobei
   ∘ das Ausführungssteuerungsmodul dazu eingerichtet ist, dem Prozess einen Zugriff auf Ausführungsumgebungseigenschaften der Ausführungsumgebung und/oder des Ausführungssteuerungsmoduls bereitzustellen, damit der Prozess ein Prüfergebnis einer Prüfung der Ausführungsumgebung anhand der Ausführungsanforderungen und der Ausführungsumgebungseigenschaften berechnet,
   ∘ abhängig vom Prüfergebnis Steuerbefehle zum Steuern einer Ausführung des Prozesses ausgeführt werden.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Beispielsweise ist unter "rechnergestützt" auch "computerimplementiert" zu verstehen.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor), eine Tensorverarbeitungseinheit TPU (Tensor Processing Unit), ein Netzwerkprozessor oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", "aufweisen" und dergleichen, insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter einer "Prüfsumme" kann im Zusammenhang mit der Erfindung beispielsweise eine kryptographische Prüfsumme oder kryptographischer Hash bzw. Hashwert verstanden werden. Eine entsprechende Prüfsumme kann z. B. mittels einer kryptographischen Hashfunktion gebildet werden. Die Prüfsumme wird z. B. über eine Nachricht (z. B. die Nachricht oder die weitere Nachricht) und/oder über eine oder mehrere Nachrichten (z. B. die Nachricht und die weitere Nachricht) und/oder über einen Teilbereich einer Nachricht (z. B. die Nachricht oder die weitere Nachricht) gebildet oder berechnet. Eine Prüfsumme kann z. B. eine digitale Signatur oder ein kryptographischer Nachrichtenauthentisierungscode sein.

Unter einer "Ausführungsumgebung" kann im Zusammenhang mit der Erfindung beispielsweise ein Gerät verstanden werden. Hierzu kann die Ausführungsumgebung beispielsweise einen Prozessor umfassen oder ein Prozessor sein, der beispielsweise in einem entsprechenden Gerät (z. B. ein Feldgerät, eine Fertigungsmaschine, ein Steuerungsgerät z. B. für Infrastrukturanlagen) installiert ist. Ein solches Gerät kann dann z. B. einen solchen Prozessor umfassen. Ein Gerät kann beispielsweise ein Laptop, ein Rechner, ein Feldgerät, ein Fertigungsmaschine, ein Steuerungsgerät z. B. für Infrastrukturanlagen sein. Ein Gerät kann beispielsweise auch ein IoT-Gerät, ein SmartGerät wie ein Tablet, ein SmartPhone oder eine Smart-Watch sein. Die Ausführungsumgebung kann z. B. auch ein Cloudservice sein, der für die Ausführung von Prozessen ausgebildet ist.

Ein "Ausführungssteuerungsmodul" kann im Zusammenhang mit der Erfindung beispielsweise eine Isolationsumgebung sein. Bei der Isolationsumgebung oder dem Ausführungssteuerungsmodul handelt es sich vorzugsweise um Virtualisierungsdomänen, in denen ein oder mehrere Prozesse laufen. Bei dem Virtualisierungsansatz kann es sich z. B. um OS-level Virtualisierung, also der Virtualisierung von Betriebssystemressourcen wie dem Dateisystem oder dem Netzwerk-Stack, handeln. So können Prozesse z. B. in unterschiedlichen Virtualisierungsdomänen hinsichtlich der vorhandenen Betriebssystemressourcen isoliert werden. Dazu können insbesondere Linux control groups (cgroups) und/oder Linux Namespaces verwendet werden. Weiterhin kann es sich aber auch z. B. um eine Hardware-Virtualisierung handeln, wie z. B. bei einem Typ 1 oder Typ 2 Hypervisor. Dabei werden insbesondere kritische Teile der Hardware virtualisiert, z. B. Arbeitsspeicher, um Prozesse in unterschiedlichen Virtualisierungsdomänen voneinander zu isolieren. Eine weitere Möglichkeit zur Realisierung der Isolationsumgebungen oder des Ausführungssteuerungsmoduls bietet z. B. die Paravirtualisierung.

Weiterhin kann es sich bei der Isolationsumgebung oder dem Ausführungssteuerungsmoduls z. B. auch um eine Domäne eines Mandatory Access Control (MAC) Systems, wie beispielsweise SELinux oder AppArmor, handeln. Die Isolationsumgebung oder das Ausführungssteuerungsmodul können beispielsweise auch eine Kombination von Virtualisierungsdomänen und MAC-Domänen sein.

Bei weiteren Ausführungsformen der Ausführungsumgebung ist der Prozess eine Applikation, und/oder der Prozess und/oder die Applikation ist nachladbar und/oder ein Nachladen des Prozesses und/oder der Applikation erfolgt über den Prozessor und/oder eine Schnittstelle.

Bei der Schnittstelle kann es sich beispielsweise um eine Programmschnittstelle, Prozessorschnittstelle, Datenschnittstelle oder einen Bus handeln.

Bei weiteren Ausführungsformen der Ausführungsumgebung geben die Ausführungsanforderungen Bedingungen dem Ausführungssteuerungsmodul für das Ausführen des Prozesses vor.

Beispielsweise können die Bedingungen der Ausführungsanforderungen fordern, dass die Ausführungsumgebungseigenschaften bestätigen, dass z. B. das Ausführungssteuerungsmodul einen geschützten Speicher umfasst, um z. B. kryptographische Schlüssel sicher laden zu können. Der geschützte Speicher kann beispielsweise durch eine Speichervollverschlüsselung (full memory encryption) realisiert sein, bei der der ein Arbeitsspeicher-Baustein (DRAM), der mit dem Prozessor verbunden ist, verschlüsselte Speicherinhalte aufweist.

Bei weiteren Ausführungsformen der Ausführungsumgebung steuern die Ausführungsanforderungen einen Zugriff und/oder die Verwendung von Ressourcen der Ausführungsumgebung für das Ausführen des Prozesses.

Mittels dieser Ausführungsanforderungen kann beispielsweise gesteuert werden, welche Ressourcen in dem Ausführungssteuerungsmodul (z. B. eine Isolationsumgebung) sichtbar oder zugreifbar sind, ob es Prozesse mit erhöhten Privilegien in dem Ausführungssteuerungsmodul gibt, oder ob eine bestimmte Grenze für die CPU-Last in dem Ausführungssteuerungsmodul gilt. Diese Information kann dabei vorzugsweise durch das Betriebssystem oder eine App-Runtime an den Prozess übergeben werden, und/oder sie kann durch den Prozess selbst ermittelt werden.

Bei weiteren Ausführungsformen der Ausführungsumgebung geben die Ausführungsanforderungen eine oder mehrere weitere Prüfungen vor, die anhand der Ausführungsumgebungseigenschaften überprüft werden.

Beispielsweise kann hierdurch die Prüfung wiederholt erfolgen. Es können z. B. mehrere Prüfungen verkettet werden, d. h. es können beispielsweise kryptographische Operationen, insbesondere eine Schlüsselableitung abhängig von einem Prüfschritt und/oder mehreren Prüfschritten durchgeführt werden, die z. B. durch die Ausführungsanforderungen vorgegeben sind. So kann beispielsweise ein Schlüssel erst durch eine Folge von Schlüsselableitungen, die jeweils nach einer erfolgten Prüfung der Ausführungsumgebungseigenschaften erfolgen. Beispielsweise kann eine Information der Ausführungsumgebungseigenschaften in die Schlüsselableitung als Schlüsselableitungsparameter eingehen. Dies kann beispielsweise durch die Steuerbefehle abhängig von einem/dem entsprechenden Prüfergebnis gesteuert werden.

Bei weiteren Ausführungsformen der Ausführungsumgebung umfassen die Ausführungsumgebung oder das Ausführungssteuerungsmodul einen Schlüsselspeicher. Alternativ oder zusätzlich geben die Ausführungsanforderungen Zugriffsbedingungen für einen Zugriff des Prozesses auf Schlüssel des Schlüsselspeichers vor. Alternativ oder zusätzlich steuern die Ausführungsanforderungen und/oder die Zugriffsbedingungen eine Verarbeitung von Schlüsseln des Schlüsselspeichers bei der Ausführung des Prozesses.

Der Schlüsselspeicher kann z. B. der Keystore bei Android sein. Beispielsweise kann der Prozess z. B. über seine Ausführungsanforderungen beim Ablegen eines Schlüssels im Schlüsselspeicher spezifizieren, unter welchen Umständen diese Schlüssel für den Prozess zugreifbar sein sollen und/oder gelöscht werden sollen. Der Schlüsselspeicher kann dabei z. B. als User-Space Service, durch den Betriebssystem-Kernel, oder in Hardware realisiert werden. So kann z. B. der Prozess über die Ausführungsanforderungen definieren, dass ein dem Prozess zugeordneter Schlüssel automatisch gelöscht oder gesperrt wird, wenn die Ausführungsanforderungen durch die Ausführungsumgebungseigenschaften nicht erfüllt sind. Das Löschen bzw. das Sperren kann dabei z. B. durch die Steuerbefehle erfolgen.

Bei weiteren Ausführungsformen der Ausführungsumgebung wird die Steuerung der Prüfung mittels einer Prüfzeitkonfiguration der Ausführungsanforderungen gesteuert, wobei beispielsweise mittels der Prüfzeitkonfiguration die Prüfung beim Start des Prozesses vorgegeben wird und/oder zyklisch während einer Ausführung des Prozesses vorgegeben wird und/oder durch ein Ereignis vorgegeben wird.

Bei weiteren Ausführungsformen der Ausführungsumgebung ist das Ausführungssteuerungsmodul eine oder mehrere Virtualisierungsdomänen, die den Prozess oder mehrere weitere Prozesse ausführen oder das Ausführungssteuerungsmodul ist eine Domäne eines Mandatory Access Control Systems.

Bei weiteren Ausführungsformen der Ausführungsumgebung sind die Virtualisierungsdomänen hierarchisch angeordnet.

Bei weiteren Ausführungsformen der Ausführungsumgebung umfassen die Ausführungsanforderungen Steuerungsbefehle zum Ausführen und/oder zum Steuern von Härtungsmaßnahmen für die Ausführungsumgebung und/oder das Ausführungssteuerungsmodul.

Bei weiteren Ausführungsformen der Ausführungsumgebung umfassen die Ausführungsumgebungseigenschaften Daten zu verfügbaren und/oder nutzbaren und/oder aktiven Härtungsmaßnahmen für die Ausführungsumgebung und/oder das Ausführungssteuerungsmodul.

Bei weiteren Ausführungsformen der Ausführungsumgebung sind die Ausführungsanforderungen für das Ausführungssteuerungsmodul und/oder weitere Ausführungssteuerungsmodule vorgegeben, wobei die weiteren Ausführungssteuerungsmodule beispielsweise Ausführungssteuerungsmodule sind, die weitere Prozesse ausführen, mit denen der Prozess kommuniziert.

Die Erfindung ist dahingehend vorteilhaft, damit z. B. ein Prozess (z. B. eine Applikation oder eine nachladbare App) Informationen erhalten kann, um die Eigenschaften (z. B. Ausführungsumgebungseigenschaften) seiner Ausführungsumgebung besser beurteilen zu können. Vorteilhaft ist zudem, dass z. B. diese Information zur Beurteilung der Sicherheit des Ausführungssteuerungsmoduls (z. B. eine Isolationsumgebung) und/oder der Ausführungsumgebung verwendet werden kann. Ein Prozess (z. B. eine Applikation) kann z. B. diese Information so gegenüber ihren Ausführungsanforderungen, die für eine sichere Ausführung erfüllt sein müssen, vergleichen. Ein Prozess (z. B. eine Applikation) kann z. B. Zugriffe/Verwendung auf zu schützende Daten, z. B. kryptographische Schlüssel, an die Erfüllung vorgegebener Ausführungsanforderungen binden. Die Schlüssel sind somit z. B. nur in einem integren Zustand des Ausführungssteuerungsmoduls und/oder der Ausführungsumgebung verwendbar, der z. B. durch die Ausführungsanforderungen vorgegeben wird.

Gemäß einem weiteren Aspekt betrifft die Erfindung ein computerimplementiertes Verfahren zum Ausführen eines Prozesses mit folgenden Verfahrensschritten:
- Laden des Prozesses;
- Konfigurieren und/oder Speichern von Ausführungsanforderungen für eine Ausführung des Prozesses;
- Bereitstellen eines Zugriffes auf Ausführungsumgebungseigenschaften für den Prozess, damit der Prozess ein Prüfergebnis einer Prüfung anhand der Ausführungsanforderungen und der Ausführungsumgebungseigenschaften berechnet;
- Ausführen von Steuerbefehlen abhängig vom Prüfergebnis der Steuerbefehle, wobei die Steuerbefehle eine Ausführung des Prozesses steuern.

Bei weiteren Ausführungsformen des Verfahrens umfasst das Verfahren weitere Verfahrensschritte, um die funktionalen Merkmale der Ausführungsumgebung oder um weitere Merkmale der Ausführungsumgebung bzw. deren Ausführungsformen zu realisieren.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die genannte erfindungsgemäße Ausführungsumgebung erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es die erfindungsgemäße Ausführungsumgebung erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung;
- Fig. 3: ein weiteres Ausführungsbeispiel der Erfindung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne, dass dies explizit in dem jeweiligen Ausführungsbeispiel genannt sein muss.

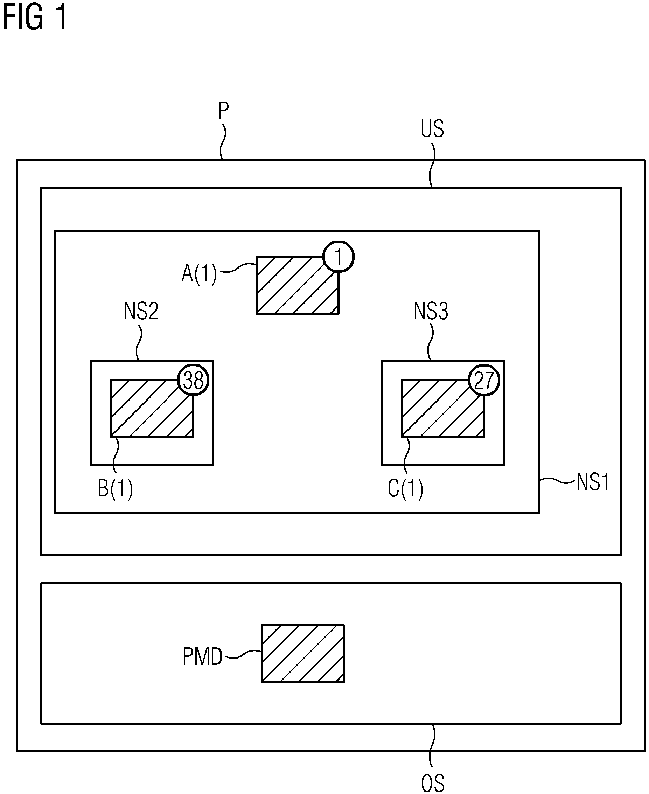

Fig. 1 zeigt ein Ausführungsbeispiel der Erfindung.

Im Einzelnen zeigt die Fig. 1 eine Ausführungsumgebung P, die z. B. ein Prozessor wie eine CPU sein kann.

Die Ausführungsumgebung P umfasst eine Kommunikationsschnittstelle zum Laden eines oder mehrerer Prozesse. Diese Prozesse können beispielsweise eine erste Applikation A, eine zweite Applikation B und eine dritte Applikation C sein. Beim Laden des Prozesses werden z. B. entsprechende Prozessdaten (z. B. Programmcode) in einen Speicher geladen.

Die Ausführungsumgebung P umfasst ein erstes Ausführungssteuerungsmodul NS1 und ein Konfigurationsmodul, wobei das Konfigurationsmodul dazu eingerichtet ist Ausführungsanforderungen für eine Ausführung der entsprechenden Prozesse (z. B. die erste Applikation A und/oder die zweite Applikation B und/oder die dritte Applikation C) zu konfigurieren und/oder zu speichern. Die Ausführungsumgebung P umfasst beispielsweise ein zweites Ausführungssteuerungsmodul NS2 und ein drittes Ausführungssteuerungsmodul NS3, die analog zum ersten Ausführungssteuerungsmodul NS1 ausgebildet sein können.

Das erste Ausführungssteuerungsmodul NS1 ist dazu eingerichtet dem Prozess einen Zugriff auf Ausführungsumgebungseigenschaften der Ausführungsumgebung und/oder des Ausführungssteuerungsmoduls bereitzustellen, damit der Prozess ein Prüfergebnis einer Prüfung der Ausführungsumgebung und/oder des entsprechenden Ausführungssteuerungsmoduls NS1-NS3 anhand der Ausführungsanforderungen und der Ausführungsumgebungseigenschaften berechnet, wobei abhängig vom Prüfergebnis Steuerbefehle zum Steuern einer Ausführung des Prozesses ausgeführt werden.

Der Prozess kann z. B. die Information zu seiner Ausführungsumgebung selbst überprüfen, sodass der Prozess abhängig vom Prüfergebnis die Prozessausführung mittels der Steuerbefehle anpassen kann.

Ein Prozess kann beispielsweise auch Programmcode sein, der in der Ausführungsumgebung mit Hilfe des Ausführungssteuerungsmoduls ausgeführt wird.

Die Ausführungsanforderungen können beispielsweise ein Teil der zu ladenden Prozessdaten sein. Beim Laden des Prozesses greift der Prozess z. B. auf diese Ausführungsanforderungen zu und konfiguriert dann mittels der Schnittstelle des Konfigurationsmodul die Ausführungsanforderungen, die für die Ausführung des Prozesses notwendig sind. Beispielsweise kann der Prozess hierfür einen Teil der Ausführungsanforderungen benutzen, da z. B. der Prozess beim Laden festgestellt hat, dass es sich um ein bestimmtes Betriebssystem handelt (z. B. Linux) und Teile der Ausführungsanforderungen z. B. für ein anderes Betriebssystem gedacht sind (z. B. Windows). Mit anderen Worten können die Ausführungsumgebungseigenschaften beispielsweise schon beim Laden des Prozesses überprüft werden, um abhängig davon die relevanten Teile der Ausführungsanforderungen für die Ausführung des Prozesses zu laden und/oder durch das Konfigurationsmodul zu speichern.

Die Ausführungsanforderungen werden z. B. in einer Variante mittels einer Schnittstelle des Konfigurationsmoduls durch den entsprechenden Prozess selbst festgelegt. Hierzu werden die entsprechenden Ausführungsanforderungen z. B. beim Laden des Prozesses an die Ausführungsumgebung und/oder an das Ausführungssteuerungsmodul über die Schnittstelle übermittelt.

Mit der Erfindung kann ein Prozess (z. B. eine der Applikationen A-C) in einem entsprechenden Ausführungssteuerungsmodul NS1-NS3 (z. B. entsprechende Isolationsumgebungen) einer Ausführungsumgebung P ausgeführt werden. Es kann mit der Überprüfung der Ausführungsumgebungseigenschaften sichergestellt werden, dass der Prozess tatsächlich nur in einem entsprechenden Ausführungssteuerungsmodul ausgeführt wird, das die vom Prozess vorgegebenen Ausführungsanforderungen erfüllt.

Es wird z. B. dem entsprechenden Prozess (z. B. eine nachladbare App) mittels der Ausführungsanforderungen ermöglicht, kritische Daten wie kryptographische Schlüssel an Bedingungen (z. B. Ausführungsanforderungen, die die Ausführungsumgebungseigenschaften erfüllen sollen) seines Ausführungssteuerungsmoduls (z. B. eine Isolationsumgebung wie eine Virtualisierungsdomäne, MACDomäne) zu knüpfen und z. B. den Zugriff auf oder die Verwendung der Daten somit zu schützen.

Hierzu werden beispielsweise die Ausführungsumgebungseigenschaften bereitgesellt. Diese Ausführungsumgebungseigenschaften beinhalteten beispielsweise, welche Ressourcen in der Isolationsumgebung sichtbar oder zugreifbar sind, ob es Prozesse mit erhöhten Privilegien in der Isolationsumgebung gibt, oder ob eine bestimmte Grenze für die CPU-Last in der Isolationsumgebung gilt. Diese Ausführungsumgebungseigenschaften können dabei vorzugsweise durch das Betriebssystem oder eine App-Runtime an eine App übergeben werden, und/oder sie kann durch die App selbst ermittelt werden.

Die App verwendet diese Ausführungsumgebungseigenschaften zum Ausführungssteuerungsmodul (z. B. eine Isolationsumgebung) anschließend, um ihre Ausführungsumgebung und/oder ihr Ausführungssteuerungsmodul anhand einer Referenzinformation (z. B. Ausführungsanforderungen) zu bewerten, beispielsweise ob diese für sicherheitskritische Berechnungen (z. B. Ausstellen von Zertifikaten) ausreichend geschützt oder hinreichend restriktiv konfiguriert wurde.

Die Ausführungsanforderungen können z. B. dazu verwendet werden, um die Ausführung von kryptographischen Operationen zu schützen. Beispielsweise wird ein bestimmter kryptographischer Schlüssel nur verwendet und/oder eine bestimmte kryptographische Operation erfolgt nur, wenn die Prüfung der Ausführungsumgebungseigenschaften ergibt, dass diese die durch die App geforderten Kriterien (Ausführungsanforderungen) erfüllt.

Dies wird anhand des ermittelten Prüfergebnisses festgestellt. Erfüllen die Ausführungsumgebungseigenschaften die vom Prozess geforderten Ausführungsanforderungen, so wird der Prozess (weiter) ausgeführt. Dies wird beispielsweise durch die Steuerbefehle gesteuert.

Erfüllen die Ausführungsumgebungseigenschaften die vom Prozess geforderten Ausführungsanforderungen (z. B. die beispielsweise bei der Entwicklung gestellt wurden) nicht, kann sich der Prozess (z. B. eine App) z. B. mittels der Steuerbefehle beenden, vorgegebene Funktionen (z. B. durch die Ausführungsanforderungen vorgegeben) verweigern, eine Ersatzoperation durchführen (z.B. mit einem Dummy-Schlüssel, um einen möglichen Angreifer zu verwirren) oder sicherheitskritische Objekte wie kryptographische Schlüssel löschen.

Diese Prüfung und das Enforcement erfolgt vorzugsweise durch den Prozess selbst. Die Prüfungen und die kryptographische Operation kann dabei durch obfuszierten Code erfolgen, um eine Manipulation der Prüfung zu erschweren.

Weiterhin kann die Prüfung wiederholt erfolgen. Es können mehrere Prüfungen verkettet werden, d. h. es werden kryptographische Operationen, insbesondere eine Schlüsselableitung abhängig von einem Prüfschritt durchgeführt. So entsteht z. B. ein Schlüssel erst durch eine Folge von Schlüsselableitungen, die jeweils nur nach einer erfolgten Prüfung der Ausführungsumgebung oder der Ausführungsumgebungseigenschaften erfolgen. In einer Variante geht eine Information zur Ausführungsumgebung (z. B. eine Information der Ausführungsumgebungseigenschaften) in die Schlüsselableitung als Schlüsselableitungsparameter ein.

Weiterhin kann die Ausführungsumgebung einem Prozess (z. B. einer App) einen Schlüsselspeicher bereitstellen (wie z. B. bei Android der Keystore). Dabei kann eine App über die Ausführungsanforderungen beim Ablegen eines kryptographischen Schlüssels im Schlüsselspeicher spezifizieren, unter welchen Umständen diese Schlüssel für die App zugreifbar sein sollen und/oder gelöscht werden sollen.

Der Schlüsselspeicher kann dabei als User-Space Service, durch den Betriebssystem-Kernel, oder in Hardware realisiert werden. So kann z. B. eine App mit den Ausführungsanforderungen definieren, dass ein der App zugeordneter Schlüssel automatisch gelöscht oder gesperrt wird, wenn der SafetyNet-Mechanismus eine Manipulation des Geräts erkennt, oder allgemein die Isolationsumgebung nicht einer beim initialen Erzeugen / Ablegen des Schlüssels spezifizierten Referenz entspricht. Dies wird ebenfalls durch die Ausführungsanforderungen vorgegeben und ist durch die Ausführungsumgebungseigenschaften überprüfbar.

Es können auch weitere, feingranulare Kriterien in den Ausführungsanforderungen definiert werden, z. B. ob der Schlüssel zugreifbar ist, wenn der Patch-Status des Geräts nicht aktuell ist oder ob ein hinreichend starkes Gerätepasswort gesetzt ist. Die App/der Prozess würde dann zwar gestartet, würde aber nicht mehr auf die kryptographischen Schlüssel zugreifen können und könnte dann geeignet mittels der Steuerbefehle darauf reagieren (z. B. Gerät herunterfahren, Fehlermeldung ausgeben, einen Administrator über meine Nachricht informieren).

Die Prüfung der entsprechenden Ausführungssteuerungsmodule (z. B. Isolationsumgebung(en)) anhand der entsprechenden Ausführungsumgebungseigenschaften kann allgemein einmalig beim Starten der App, zyklisch während der Ausführung, oder z. B. Event-basiert mittels Callback im Falle von Änderungen (getriggert z. B. durch Ausführen eines neuen Prozesses in der gleichen Isolationsumgebung) erfolgen.

Sie kann auch direkt vor der Durchführung einer bestimmten kryptographischen Operation, oder bei einem Zugriff auf den Schlüsselspeicher erfolgen.

Sie kann auch während der Durchführung einer kryptographischen Operation, die aus mehreren Schritten besteht, erfolgen.

Weiterhin ist es denkbar, eine Information zu vorhandenen Seitenkanalschutzmßanahmen in den Ausführungsumgebungseigenschaften bereitzustellen (z. B. ob und welche Härtungsmaßnahmen gegen Spectre, Meltdown aktiviert sind, ob ein physikalischer Abstrahlschutz oder ein Tamper-Schutz vorhanden und aktiv ist) .

Zudem können Isolationsumgebungen, die als Virtualisierungsdomänen realisiert sind, hierarchisch angeordnet werden, wie in Fig. 1 gezeigt ist. Die Fig. 1 zeigt eine OS-level Virtualisierung, wie sie beispielsweise bei Linux-basierten Betriebssystemen mit Hilfe von Namespaces realisiert werden kann. Dabei werden speziell die Prozess-IDs virtualisiert, sodass Prozesse einer Virtualisierungsdomäne NS2 die Prozesse einer anderen Virtualisierungsdomäne NS1 und NS3 nicht sehen und somit beeinflussen können.

Fig. 1 zeigt weiter einen User-Space US und einen Betriebssystemkernel OS (z. B. ein Linuxbetriebssystemkernel), wobei der Betriebssystemkernel die Prozessmetadaten PMD (z. B. zu den entsprechenden Virtualisierungsdomänen NS1-NS3) zu den Prozessen A, B und C umfasst. Die Prozessmetadaten PMD können das entsprechende Prüfergebnis und/oder die entsprechenden Ausführungsanforderungen und/oder die entsprechenden Ausführungsumgebungseigenschaften eines Prozesses (z. B. des ersten Prozesses oder der ersten Applikation A) umfassen.

Die Zahl, die in Klammern nach dem entsprechenden Prozess (A, B, C) angegeben ist, z. B. A(1), gibt die Prozess-Id (PID) des Prozesses innerhalb des Ausführungssteuerungsmoduls an (z. B. eine Isolationsumgebung, die als die Virtualisierungsdomäne NS1 realisiert ist).

Die Zahl in den runden Feldern (1, 38, 27) gibt an, mit welcher PID der entsprechende Prozess aus dem übergeordneten Ausführungssteuerungsmodul (Vater-Ausführungssteuerungsmodul) adressiert wird.

Der Betriebssystem-Kernel kann über die Prozessmetadaten PMD die genaue Zuordnung jedes einzelnen Prozesses zu einer Virtualisierungsdomäne (also dem entsprechenden Ausführungssteuerungsmodul), bzw. einer Ebene in einer Hierarchie von Virtualisierungsdomänen durchführen. Insbesondere verfügt der Betriebssystem-Kernel somit über die genaue Information der Isolationsumgebung/Ausführungssteuerungsmodul jeder App.

Im Folgenden werden mehrere Beispiele zu Ausführungsanforderungen eines Prozesses und/oder Ausführungsumgebungseigenschaften dargestellt, die einzeln oder in einer Kombination in den entsprechenden Ausführungsanforderungen vorgegeben werden und/oder durch die Ausführungsumgebung und/oder das Ausführungssteuerungsmodul als Ausführungsumgebungseigenschaften bereitgestellt werden:
Eine Auflistung von Dateien, auf die die Isolationsumgebung des Prozesses exklusiven oder geteilten Zugriff besitzt. Dies ist insbesondere für Dateien mit sicherheitskritischem Inhalt relevant, z. B. kryptographische Schlüssel, root-Zertifikate, die nicht manipuliert werden dürfen.
Eine Auflistung von Hardware-Schnittstellen, auf die die Isolationsumgebung des Prozesses exklusiven oder geteilten Zugriff besitzt. Dies ist insbesondere für Schnittstellen zu Sicherheits- oder Safety-kritischer Hardware relevant, z. B. einem TPM-Schlüsselspeicher.
Information zu anderen Prozessen in der gleichen Isolationsumgebung und ihren Privilegien (z. B. Linux Capabilities, UID / GID). Diese Information kann von einem Prozess verwendet werden, um das Bedrohungspotenzial, welches von anderen Prozessen ausgeht, beurteilen zu können. Läuft beispielsweise ein ungeschützter Webserver mit hohen Privilegien in der gleichen Virtualisierungsdomäne, könnte dessen Kompromittierung auch den zu schützenden Prozess und die von ihr verwendeten Ressourcen in Mitleidenschaft ziehen.
Informationen, ob virtualisierte Ressourcen wie ein virtualisierter Netzwerk-Stack der Isolationsumgebung in anderen Isolationsumgebungen verwendet werden kann, bzw. sichtbar ist.
Es kann Information über die Hierarchie von Virtualisierungsdomänen bereitgestellt werden. So wird beispielsweise einem Prozess ermöglicht festzustellen, ob sie in der richtigen Virtualisierungsdomäne läuft, oder ob die Struktur der erwarteten entspricht.
Es kann sich lediglich um eine Referenz handeln, z. B. eine kryptographische Prüfsumme, deren Input die einzelnen zugreifbaren Komponenten (z. B. Dateipfade) und entsprechenden Zugriffsrechte sind. Ein solcher Referenzwert kann einfacher überprüft werden, erlaubt allerdings keine detaillierte semantische Prüfung.

In einer Variante umfasst ein Prozess nur Informationen (z. B. Ausführungsumgebungseigenschaften und/oder Ausführungsanforderungen) über ihre eigene Isolationsumgebung.

Weitere Varianten sehen auch vor, dass Daten (z. B. Ausführungsumgebungseigenschaften) über mehrere Isolationsumgebungen, z. B. andere MAC-Domänen oder Virtualisierungsdomänen, bereitgestellt werden, um eine Isolierung eines Prozesses besser bewerten zu können. So kann beispielsweise festgestellt werden, ob es Isolationsumgebungen gibt, die die CPU voll auslasten und die Funktionalität der App somit beeinträchtigen können.

Weiterhin kann einem Prozess über die Ausführungsumgebungseigenschaften eine Information über andere Prozesse bereitgestellt werden. So kann z. B. der Prozess die Ausführung verweigern, wenn auf dem gleichen Host andere, aus Sicht des Prozesses nicht vertrauenswürdige oder einfach unbekannte Prozesse laufen. Dies ist z. B. sinnvoll, wenn ein Prozess kryptographische Operationen durchführt und die Gefahr besteht, dass durch Seitenkanäle ein anderer Prozess Schlüsseldaten erhält (z. B. über Spectre, Meltdown, Cache-Timing-Angriffe).

Die Bereitstellung der Ausführungsumgebungseigenschaften zur Isolationsumgebung kann beispielsweise über eine dedizierte Schnittstelle zum Betriebssystem erfolgen, wie einem Systemaufruf (z. B. get_isolation_info()), oder eine spezielle (Prozess-spezifische) virtuelle Datei (z. B./proc/self/isolation_info). Denkbar ist zudem, dass der Systemaufruf verwendet werden kann, um Informationen zur Sichtbarkeit bestimmter Ressourcen (z. B. einer Datei, dessen Pfad als Argument übergeben wird) zu erhalten.

So erhält ein Prozess mittels der Ausführungsumgebungseigenschaften beispielsweise eine Information, ob eigene kritische Dateien durch andere Prozesse aktuell zugreifbar sind. Eine andere Implementierung sieht vor, dass der Prozess nur die Referenz per Systemaufruf übergibt und die Prüfung durch das Betriebssystem erfolgt. Das Resultat des Prüfergebnisses (z. B. ok / nicht ok, Abweichung) wird anschließend dem Prozess übermittelt.

In einer weiteren Variante werden die Informationen (z. B. die Ausführungsumgebungseigenschaften) zur Isolationsumgebung beim Starten eines Prozesses durch das Betriebssystem an eine bestimmte Stelle im Addressraum des Prozesses kopiert. Dieser kann anschließend, z. B. durch Verwendung einer entsprechenden Bibliothek, darauf zugreifen.

Der Vergleich der Information zur Isolationsumgebung kann dann direkt durch einen entsprechenden Prozess erfolgen. Die für den Vergleich nötige Referenzinformation (z. B. Ausführungsanforderungen) kann dabei beim Entwickeln / Kompilieren der App hart-codiert als Teil der Binärdatei (z. B. Prozessdaten) vorliegen, oder z. B. aus einem (signierten) App-Manifest extrahiert werden.

Um zu verhindern, dass die Ausführungsanforderungen und/oder die Ausführungsumgebungseigenschaften zu einer oder mehreren Isolationsumgebungen für schadhafte Zwecke verwendet werden können, besteht die Möglichkeit den Zugriff auf diese weiter zu beschränken. Beispielsweise kann die Information nur Prozessen in vorgegebenen Isolationsumgebungen (z. B. bestimmte SELinux-Domäne) bereitgestellt werden, oder nur wenn der Prozess eine vorgegebene Eigenschaft besitzt (z. B. CAP_SYS_ISOLATION_INFO), die von dem Ausführungssteuerungsmodul überprüft werden kann.

In einer weiteren Variante stellt das Betriebssystem nur solchen Prozessen die Information zur Isolationsumgebung bereit, die eine valide Signatur aufweisen, oder in einer Whitelist stehen. Stellt das Ausführungssteuerungsmodul des Prozesses einen Schlüsselspeicher zur Verfügung, kann der Prozess eine dedizierte Schnittstelle (z. B. REST API für einen Schlüsselspeicher-Service, oder Systemaufruf set_key_policy() für einen durch Hardware / Kernel bereitgestellten Schlüsselspeicher) verwenden, um die Bedingungen an die Umgebung zu spezifizieren, unter denen der Schlüssel verwendet werden, bzw. darauf zugegriffen werden kann. Diese Bedingungen können beispielsweise durch die Ausführungsanforderungen vorgegeben werden.

Das Ausführen des Prozesses durch das Ausführungssteuerungsmodul kann dabei von einer vertrauenswürdigen Komponente übernommen werden, z. B. dem Betriebssystem-Kernel, einem VM-Host, oder einem privilegierten Container-Daemon. Der Prozess vertraut dabei beispielsweise darauf, dass diese vertrauenswürdige Komponente das Ausführungssteuerungsmodul derart einrichtet, dass diese den Anforderungen hinsichtlich Funktionalität und Sicherheit entspricht. Dies ist speziell für sicherheitskritische Applikationen wichtig, z. B. eine Certificate-Authority (CA), ein geschützter Algorithmus (Know-How-Schutz), eine Abrechnungsapplikation, vertrauenswürdige Messwerterfassung, deren Ausführungsumgebung mit entsprechender Isolierung zu weniger vertrauenswürdigen Komponenten / Umgebungen eingerichtet sein sollte.

Die Steuerbefehle, die abhängig von dem Prüfergebnis die Ausführung des Prozesses steuern, können beispielsweise vom Prozess selbst ausgeführt werden oder von dem Ausführungssteuerungsmodul ausgeführt werden oder von der Ausführungsumgebung ausgeführt werden. Hierzu umfasst der Prozess oder das Ausführungssteuerungsmodul oder die Ausführungsumgebung die entsprechenden Steuerbefehle, die von dem Prozess und/oder das Ausführungssteuerungsmodul und/oder die Ausführungsumgebung für die Steuerung genutzt werden.

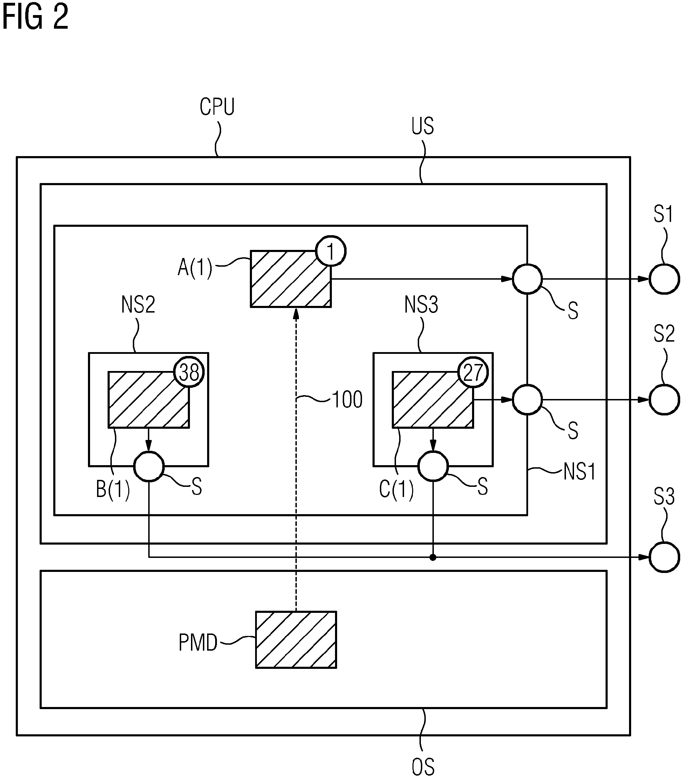

Die Fig. 2 zeigt ein weiteres Ausführungsbeispiel einer Ausführungsumgebung. Dieses Ausführungsbeispiel ist eine Erweiterung des in Fig. 1 gezeigten Ausführungsbeispiels. Entsprechend gelten die Erläuterungen bezüglich des Ausführungsbeispiels aus Fig. 1 auch für das Ausführungsbeispiel von Fig. 2.

Die Fig. 2 zeigt die Bereitstellung von Ausführungsumgebungseigenschaften zu mehreren Isolationsumgebungen mittels eines Systemaufrufs 100. Der Systemaufruf kann beispielshaft get_isolation_info() genannt werden.

Dabei besitzt der Prozess A exklusiven Zugriff auf eine erste Sensorschnittstelle S1, sowie gemeinsamen Zugriff zusammen mit Prozess B und Prozess C auf eine zweite Sensorschnittstelle S2 und eine dritte Sensorschnittstelle S3 (Pfeile für A nicht dargestellt). Dies kann der Prozess A anhand der erhaltenen Information (z. B. Ausführungsumgebungseigenschaften) und durch einen Vergleich mit einer hart-codierten Referenz (z. B. Ausführungsanforderungen) überprüfen. Der Zugriff auf die Sensorschnittstellen S1-S3 erfolgt vorzugsweise über entsprechende Datenschnittstellen S.

Erwartet der Prozess A z. B. exklusiven Zugriff auf S2 (z. B. ist das durch die Ausführungsanforderungen vorgegeben), kann die Isolationsumgebung in dem in Fig. 2 gezeigten Beispiel als zu unsicher eingestuft und eine entsprechende Reaktion z. B. durch die Steuerbefehle eingeleitet werden, wie z. B. eine Ausgabe einer Fehlermeldung.

Stimmen die erhaltenen Ausführungsumgebungseigenschaften zu einer oder mehreren Isolationsumgebungen nicht mit einem erwarteten Wert (z. B. die Ausführungsanforderungen) des Prozesses überein, kann der Prozess entsprechend darauf reagieren. Neben der erfindungsgemäßen Verwendung, um kryptographische Operationen oder den Zugriff auf sicherheitskritische Objekte zu verhindern, sind die folgenden Reaktionen möglich, die beispielsweise durch die Steuerbefehle gesteuert werden:
Der Prozess kann die Ausführung komplett verweigern, bzw. sich selbst beenden, in einen Fehler- / Debug-Modus wechseln oder einen Log-Eintrag (z. B. syslog, IMA-log) erstellen.
Es kann ein Alarm ausgelöst oder ein Schaltsignal gesetzt werden, um einen Betreiber oder Administrator zu benachrichtigen.
Der Prozess kann bestimmte Funktionen deaktivieren oder einschränken, oder gewisse Privilegien (z. B. Capabilities) abgeben.
Andere Komponenten in der Isolationsumgebung können benachrichtigt werden.

Ein Prozess kann eine oder mehrere dieser Reaktionen, insbesondere in Abhängigkeit der nicht übereinstimmenden Informationen (z. B. abhängig vom Prüfergebnis), einleiten. Denkbar ist somit, dass einige Ausführungsumgebungseigenschaften der Isolationsumgebung kritischer bewertet werden können als andere und die Reaktionen entsprechend dieser Bewertung unterschiedlich ausfallen können.

Die in den Ausführungsbeispielen gezeigten Ausführungsumgebungen können beispielsweise jeweils zusätzlich noch eine weitere oder mehrere weitere Komponente/n umfassen, wie beispielsweise einen weiteren Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

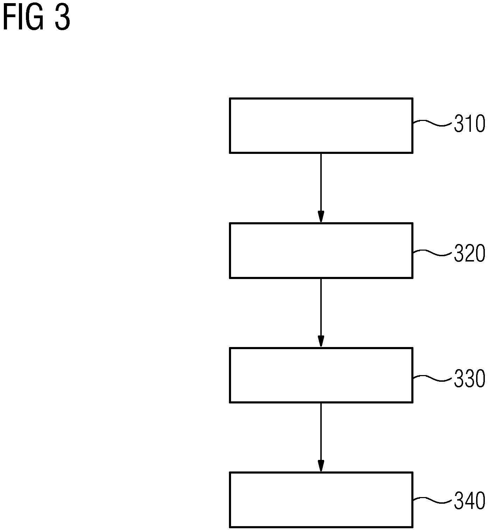

Die Fig. 3 zeigt ein weiteres Ausführungsbeispiel der Erfindung, das als Ablaufdiagramm für ein Verfahren dargestellt ist.

Das Verfahren ist vorzugsweise rechnergestützt realisiert, indem es z. B. durch einen Prozessor ausgeführt wird.

Bei dem Verfahren handelt es sich beispielsweise um ein computerimplementiertes Verfahren zum Ausführen eines Prozesses.

Das Verfahren umfasst einen ersten Verfahrensschritt 310 zum Laden des Prozesses.

Das Verfahren umfasst einen zweiten Verfahrensschritt 320 zum Konfigurieren und/oder zum Speichern von Ausführungsanforderungen für eine Ausführung des Prozesses, wobei z. B. in einer Variante die Ausführungsanforderungen mittels einer Schnittstelle durch den Prozess festgelegt werden.

Das Verfahren umfasst einen dritten Verfahrensschritt 330 zum Bereitstellen eines Zugriffes auf Ausführungsumgebungseigenschaften für den Prozess, damit der Prozess ein Prüfergebnis einer Prüfung anhand der Ausführungsanforderungen und der Ausführungsumgebungseigenschaften berechnet.

Das Verfahren umfasst einen vierten Verfahrensschritt 340 zum Ausführen von Steuerbefehlen abhängig vom Prüfergebnis, wobei die Steuerbefehle eine Ausführung des Prozesses steuern.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Ausführungsumgebung für einen Prozess aufweisend:
- eine Kommunikationsschnittstelle zum Laden des Prozesses;
- ein Konfigurationsmodul, wobei
o das Konfigurationsmodul dazu eingerichtet ist Ausführungsanforderungen für eine Ausführung des Prozesses zu konfigurieren und/oder zu speichern;
- ein Ausführungssteuerungsmodul, wobei
o das Ausführungssteuerungsmodul dazu eingerichtet ist dem Prozess einen Zugriff auf Ausführungsumgebungseigenschaften der Ausführungsumgebung und/oder des Ausführungssteuerungsmoduls bereitzustellen, damit der Prozess ein Prüfergebnis einer Prüfung der Ausführungsumgebung anhand der Ausführungsanforderungen und der Ausführungsumgebungseigenschaften berechnet,
o abhängig vom Prüfergebnis Steuerbefehle zum Steuern einer Ausführung des Prozesses ausgeführt werden.

2. Ausführungsumgebung nach Anspruch 1, wobei
- der Prozess eine Applikation ist, und/oder
- der Prozess und/oder die Applikation nachladbar ist,
- ein Nachladen des Prozesses und/oder der Applikation über den Prozessor und/oder eine Schnittstelle erfolgt.

3. Ausführungsumgebung nach einem der vorhergehenden Ansprüche, wobei
- die Ausführungsanforderungen Bedingungen an das Ausführungssteuerungsmodul für das Ausführen des Prozesses vorgeben.

4. Ausführungsumgebung nach einem der vorhergehenden Ansprüche, wobei
- die Ausführungsanforderungen einen Zugriff und/oder die Verwendung von Ressourcen der Ausführungsumgebung für das Ausführen des Prozesses steuern.

5. Ausführungsumgebung nach einem der vorhergehenden Ansprüche, wobei
- die Ausführungsanforderungen eine oder mehrere weitere Prüfungen vorgeben, die anhand der Ausführungsumgebungseigenschaften überprüft werden.

6. Ausführungsumgebung nach einem der vorhergehenden Ansprüche, wobei
- die Ausführungsumgebung oder das Ausführungssteuerungsmodul einen Schlüsselspeicher umfassen, und/oder
- die Ausführungsanforderungen Zugriffsbedingungen für einen Zugriff des Prozesses auf Schlüssel des Schlüsselspeichers vorgeben, und/oder
- die Ausführungsanforderungen und/oder die Zugriffsbedingungen eine Verarbeitung von Schlüsseln des Schlüsselspeichers bei der Ausführung des Prozesses steuern.

7. Ausführungsumgebung nach einem der vorhergehenden Ansprüche, wobei
- die Steuerung der Prüfung mittels einer Prüfzeitkonfiguration der Ausführungsanforderungen gesteuert wird,
- beispielsweise mittels der Prüfzeitkonfiguration die Prüfung beim Start des Prozesses vorgibt und/oder zyklisch während einer Ausführung des Prozesses vorgibt und/oder durch ein Ereignis vorgibt.

8. Ausführungsumgebung nach einem der vorhergehenden Ansprüche, wobei
- das Ausführungssteuerungsmodul eine oder mehrere Virtualisierungsdomänen ist, die den Prozess oder mehrere weitere Prozesse ausführen oder
- das Ausführungssteuerungsmodul eine Domäne eines Mandatory Access Control Systems ist.

9. Ausführungsumgebung nach Anspruch 8, wobei die Virtualisierungsdomänen hierarchisch angeordnet sind.

10. Ausführungsumgebung nach einem der vorhergehenden Ansprüche, wobei die Ausführungsanforderungen Steuerungsbefehle zum Ausführen und/oder zum Steuern von Härtungsmaßnahmen für die Ausführungsumgebung oder das Ausführungssteuerungsmodul umfassen.

11. Ausführungsumgebung nach einem der vorhergehenden Ansprüche, wobei die Ausführungsumgebungseigenschaften Daten zu verfügbaren und/oder nutzbaren und/oder aktiven Härtungsmaßnahmen für die Ausführungsumgebung oder das Ausführungssteuerungsmodul umfassen.

12. Ausführungsumgebung nach einem der vorhergehenden Ansprüche, wobei
- die Ausführungsanforderungen für das Ausführungssteuerungsmodul und/oder weitere Ausführungssteuerungsmodule vorgegeben sind,
- die weiteren Ausführungssteuerungsmodule beispielsweise Ausführungssteuerungsmodule sind, die weitere Prozesse ausführen, mit denen der Prozess kommuniziert.

13. Computerimplementiertes Verfahren zum Ausführen eines Prozesses mit folgenden Verfahrensschritten:
- Laden des Prozesses;
- Konfigurieren und/oder Speichern von Ausführungsanforderungen für eine Ausführung des Prozesses;
- Bereitstellen eines Zugriffes auf Ausführungsumgebungseigenschaften für den Prozess, damit der Prozess ein Prüfergebnis einer Prüfung anhand der Ausführungsanforderungen und der Ausführungsumgebungseigenschaften berechnet;
- Ausführen von Steuerbefehlen abhängig vom Prüfergebnis der Steuerbefehle, wobei die Steuerbefehle eine Ausführung des Prozesses steuern.

14. Computerprogrammprodukt mit Programmbefehlen zur Durchführung des Verfahrens nach Anspruch 13.

15. Bereitstellungsvorrichtung für das Computerprogrammprodukt nach Anspruch 14, wobei die Bereitstellungsvorrichtung das Computerprogrammprodukt speichert und/oder bereitstellt.
